# EUROPEAN PATENT SPECIFICATION

(11) **EP 2 251 505 B1**
(45) Date of publication and mention of the grant of the patent: **07.12.2016**
(21) Application number: 10004010.4
(22) Date of filing: 15.04.2010
(51) Int. Cl.: E04H 6/24, B65G 1/04

(54) **Movable platform for supporting and transporting motor vehicles for automated parking systems of one or more overlapped floors**
Verfahrbare Platform zum Tragen und Verfahren von Kraftfahrzeugen für automatische Garagensysteme mit einer oder mehreren Etagen
Plateforme mobile pour le support et le transport de véhicules motorisés pour systèmes de garage automatique d'un ou plusieurs étages superposés

(43) Date of publication of application: 17.11.2010
(73) Proprietor: Von Mehlem, Luigi Filippo, 31021 Mogliano Veneto (TV) (IT)
(72) Inventor: Von Mehlem, Luigi Filippo, 31021 Mogliano Veneto (TV) (IT)
(74) Representative: Dalla Rosa, Adriano

(56) References cited:
- DE-A1- 2 804 422

## Description

The present invention relates to an automated parking systems comprising one or more floors lying above each other, and comprising a movable platform adapted to transport such motor-vehicles towards and from previously selected parking positions.

From DE-A-2804422 is known an automated parking system having the characteristics of claim 1.

The invention is defined by the automated parking system of claim 1.

Features and advantages of the present invention will be more readily understood from the detailed description that is given below by way of not-limiting example with reference to the accompanying drawings, in which:
- Figure 1 is a schematic plan view of a sequence of mutually aligned parking bays on the same floor of a residential building that is partially used to accommodate an automated parking system, said parking bays making use of movable platforms,
- Figure 2 is a schematic front view of the building shown in Figure 1, with various parking bays overlapping, i.e. lying above each other as arranged on several parking floors, in which there can be noticed various motor-vehicles as supported on related movable platforms and arranged in the related parking bays in the building;
- Figure 3 is a schematic plan view of a parking floor with two mutually aligned parking bays, on which there are arranged related movable platforms, wherein a central elevator is provided between said two parking bays;
- Figure 4 is a schematic side view of the parking floor shown in Figure 3, with a movable platform supported in a raised parking floor;
- Figure 5 is a perspective side view of a number of movable platforms as mounted on the carrying structure of an automated parking system, and provided with a first kind of driving means for such platforms to be displaced in the longitudinal or transversal directions;
- Figure 6 is a perspective side view of a number of movable platforms, with the driving and displacement means in a construction structure differing from the one shown in Figure 5;
- Figures 7a) and 7b) are perspective side views of the movable platforms as mounted on the carrying structure of an automated parking system, and provided with a second kind of driving and displacement means that are shown to be moved into two different working positions, respectively;
- Figure 8 is a bottom view of a movable platform, with the related driving and displacement means in a different construction version so as to be adapted to cause the platform to displace into two mutually orthogonal directions;
- Figures 9a) and 9b) are a front view and a bottom view, respectively, of a movable platform, as provided with a third kind of separate driving and displacement means for it to be displaced into the longitudinal or transversal directions;
- Figure 10 shows the same views as the ones appearing in Figure 9, illustrating the movable platform supporting a motor-vehicle;
- Figure 11 is a bottom view of the movable platform with the related driving and displacement means moved into a first working position;
- Figure 12 is a same view as the one in Figure 11, illustrating the movable platform shown in Figure 10 with the related driving and displacement means moved into a second working position;
- Figure 13 is a bottom view of a movable platform, provided with a revolving means for it to be orientated into two positions lying in a mutually orthogonal arrangement;
- Figure 14 is a bottom view of the movable platform and the revolving means shown in Figure 13, with the two different, mutually orthogonal displacement positions of the same platform;
- Figure 15 is a schematic front view of the platform carrying a motor-vehicle, with the related revolving means disengaged from the same platform;

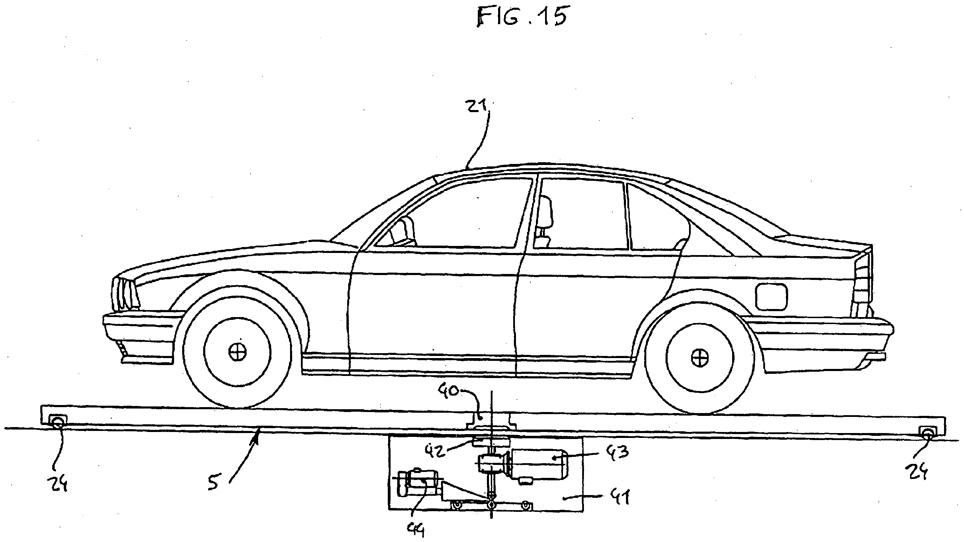

- Figure 15 is a schematic front view of the platform shown in Figure 15, with the related revolving means in a state in which it engages the same platform.

Schematically illustrated in the Figures listed above is an automated parking systems having one or more parking floors lying and extending above each other, and comprising a movable platform adapted to carry, i.e. transport motor-vehicles to and from previously selected parking positions in such automated parking systems.

Automated parking systems of the above-noted kind are known in the art and substantially provided with the construction features as described earlier in this specification in the introductory part thereof, to which reference should therefore be made for a better understanding of the same features.

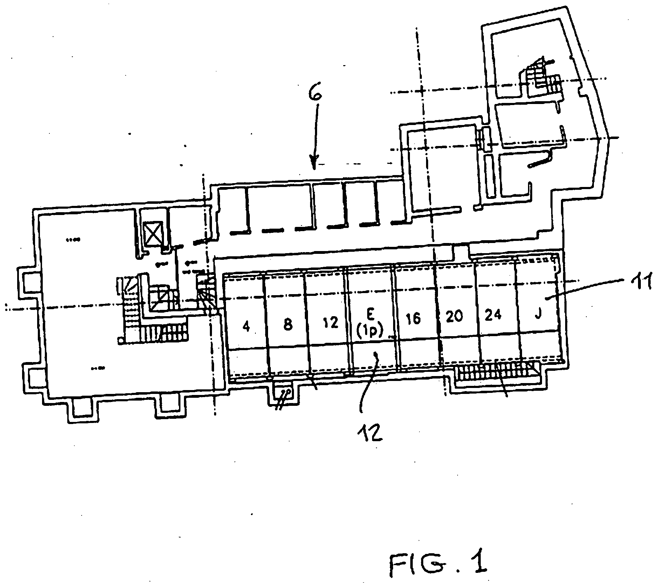

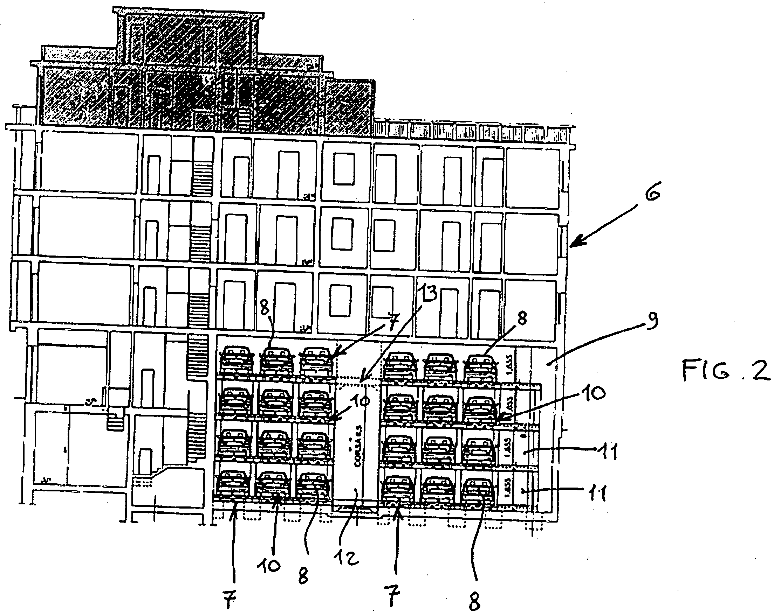

Illustrated by mere form of illustrative and non-limiting example in Figures 1 and 2 there is a residential building having a number of floors 6, in which there are provided various separate parking bays 7 for a plurality of motor-vehicles 8, wherein such parking bays in the illustrated example are provided in a lower parking space 9 of the same residential building, which extends lengthwise to cover part of the length of the building, heightwise to include two mutually overlying floors of the same building, and depthwise to cover part of the depth of the building. In the thus defined parking space here can be noticed to be accommodated some metal carrying structures 10 for supporting the related motor-vehicles and the movable platforms 5, on which said motor-vehicles are temporarily placed, and said metal carrying structures 10, in the illustrated example, define in turn four parking floors for the motor-vehicles to be able to be parked in mutually overlying planes and positions, wherein each such parking floor has a capacity of three mutually aligned and juxtaposed parking bays on the left side, and four mutually aligned and juxtaposed parking bays on the right side, wherein the places 11 lying at the far right are kept free in order to allow for the displacements of the motor-vehicles arranged on the same floor.

Furthermore, on each parking floor there is provided a free space 12 to allow for the vertical reciprocating, i.e. up-and-down displacement of a corresponding central elevator 13 that is driven by means as generally known as such in the art to be adapted to selectively displace up and down to and from each parking floor, so as to enable the related motor-vehicles carried there from the entrance side of the parking system to be arranged in the parking bays that have been selected in advance, in view of leaving such motor-vehicles lying on such bays throughout the selected parking time, for them to be ultimately withdrawn from such bays at the end of the selected parking time and be brought back at the entrance, or exit, of the parking system and handed over to the user. During all such operations, the motor-vehicles are placed on the related movable platforms 5 to be displaced towards and from the various parking bays through a sequence of movements that shall be described in greater detail further on.

In the building illustrated in Figures 1 and 2 there can be noticed that the parking space being defined by the same building is such as to allow the movable platforms - either with or without motor-vehicles being carried thereupon - to solely displace in the longitudinal direction, in the manner and with the aid of the driving and displacement means that shall be described in greater detail further on. It is however to be understood that each parking building may allow such motor-vehicles to be displaced also in the transversal direction, which is shown to extend orthogonally to the afore-cited one by mere way of illustrative example, in the manner and with the aid of the driving and displacement means that shall be described in greater detail further on.

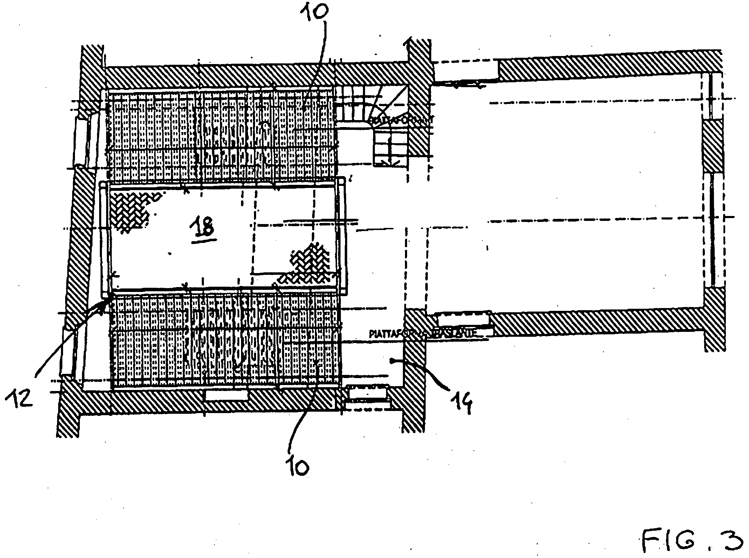

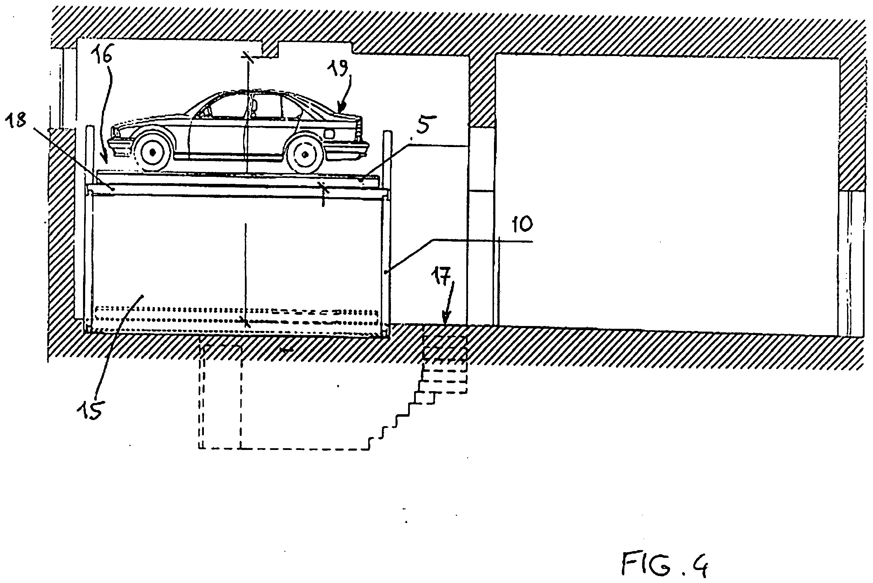

Referring now to Figures 3 and 4, these can be noticed to illustrate a parking floor or tier 14 of a parking lot having just a limited motor-vehicle accommodating space, such as for instance a garage of a parking building, in which in the depth direction of the parking place there are installed two carrying structures 10 of metal provided in a mutually aligned arrangement and separated from each other by a free space 12, wherein each one of such metal carrying structures is so shaped as to accommodate for two parking bays 15 and 16 lying above each other, wherein the lower parking bay 15 is situated at the same level of the floor 17 of the parking building, so as to allow a motor-vehicle to be driven and placed upon and removed from the same bay. Furthermore, in the free space 12 being defined between such metal carrying structures 10 there is provided a central elevator 18 that is driven by means as generally known as such in the art so as to be adapted to selectively displace in a reciprocating manner, i.e. up and down from the lower position to the upper position of said carrying structures 10, and vice-versa, wherein, in the lower position, the motor-vehicle being transported from the entrance side of the parking facility is placed onto a related movable platform 5 and loaded in the elevator 18, from where it can then be displaced - with a movement occurring in the transversal direction - into one of the two lower parking bays, as selected in advance, to be left standing there throughout the selected duration of the parking time, and wherein, upon expiry or at the end of the parking time, such motor-vehicle is again displaced into the elevator with a reverse movement and, from such elevator, it is then unloaded to be carried back at the entrance to the parking facility, where it is handed over to and picked up by its user.

In turn, the elevator 18 is displaced into the upper position so as to move and arrange each motor-vehicle (such as for instance the motor-vehicle 19 illustrated in Figure 4) onto one of the two upper parking bays, as selected in advance, to be left standing there throughout the selected duration of the desired parking time, and to remove such motor-vehicle at the end or upon expiry of the desired parking time for handing it over to the user as described above.

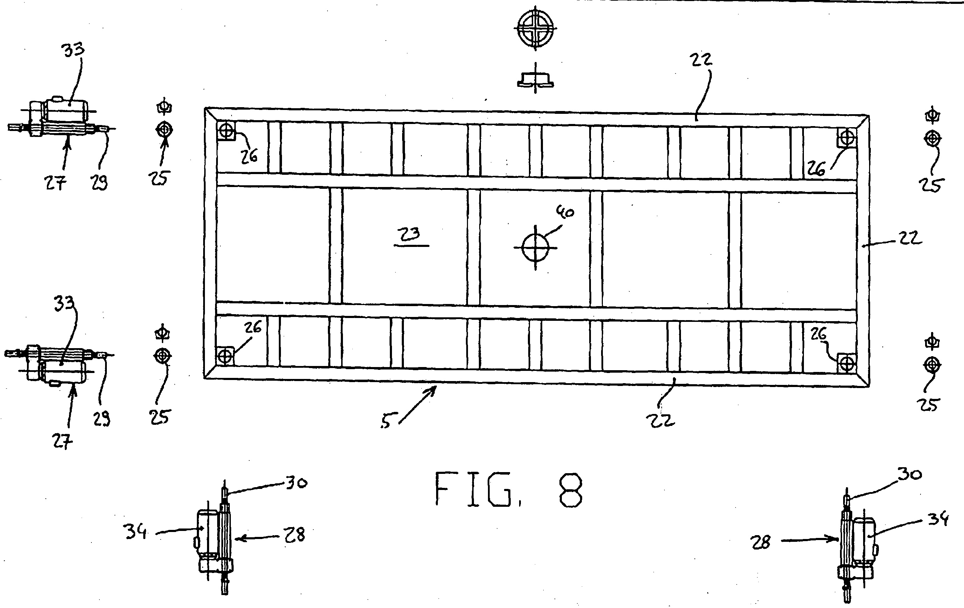

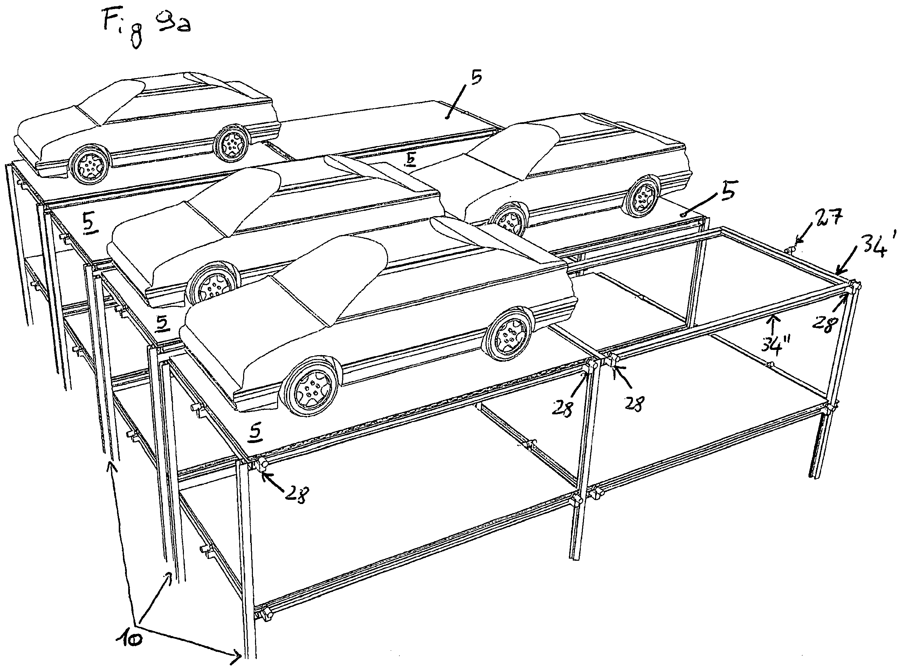

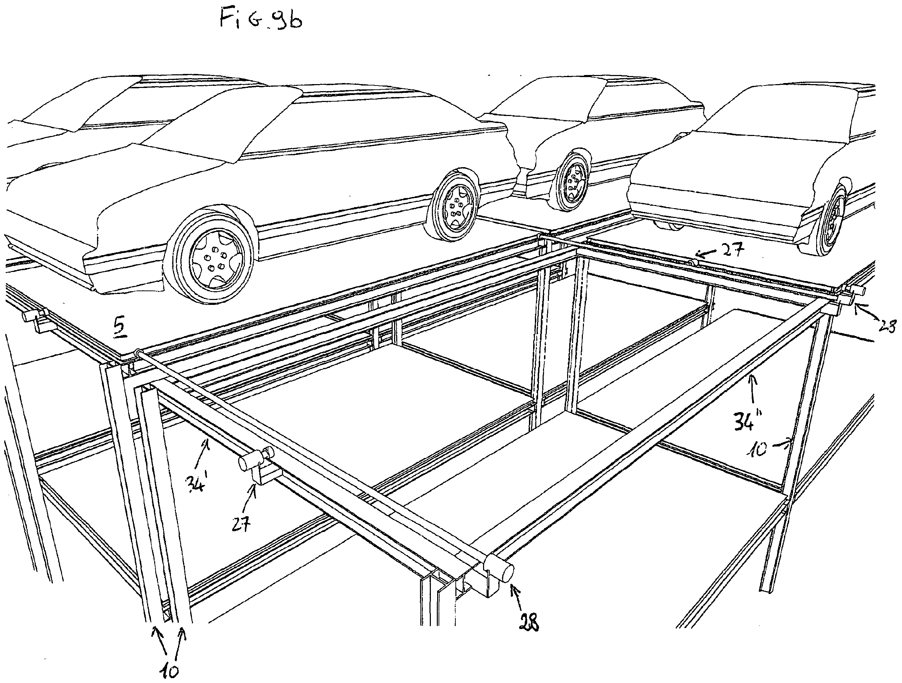

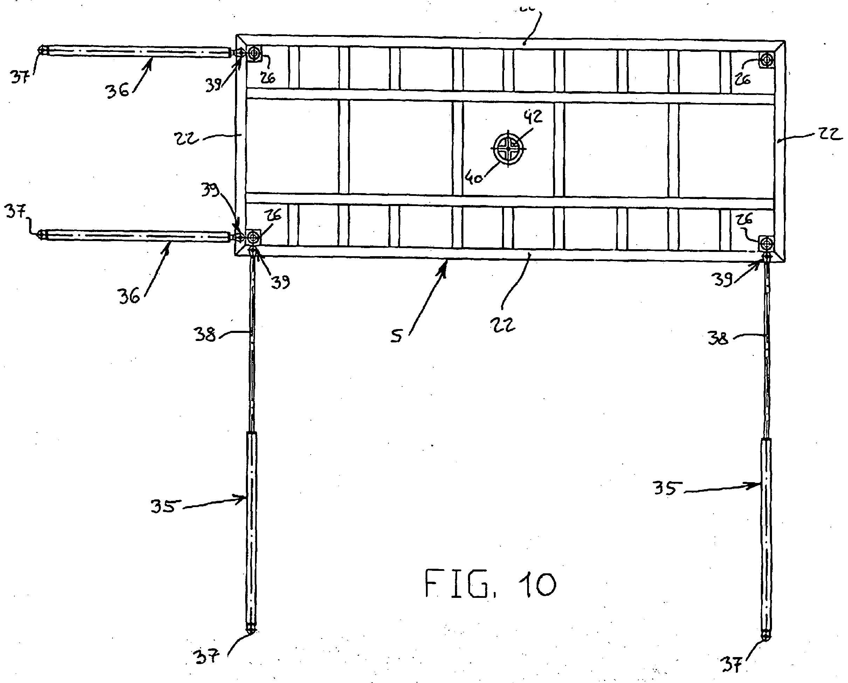

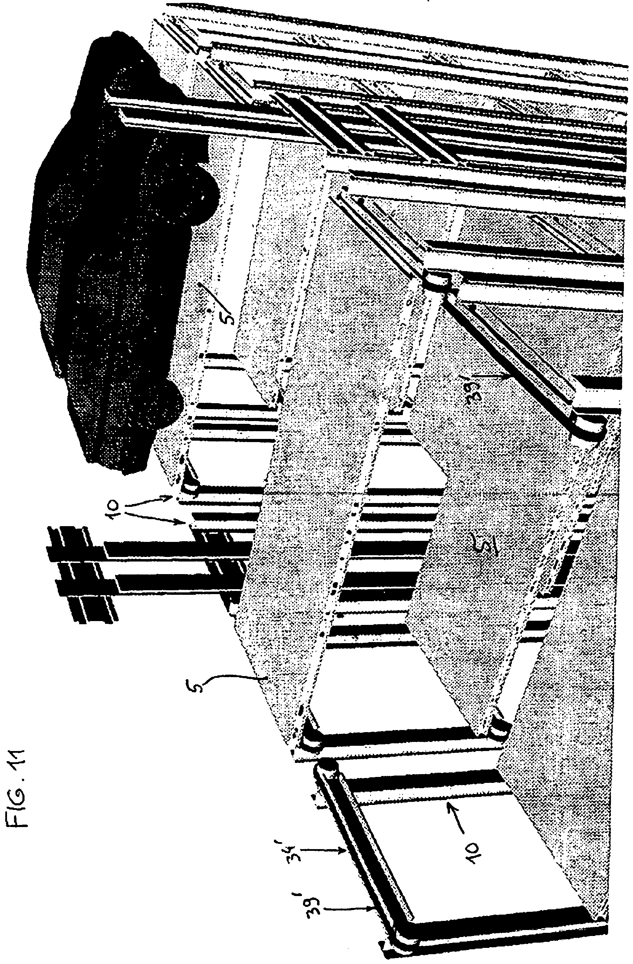

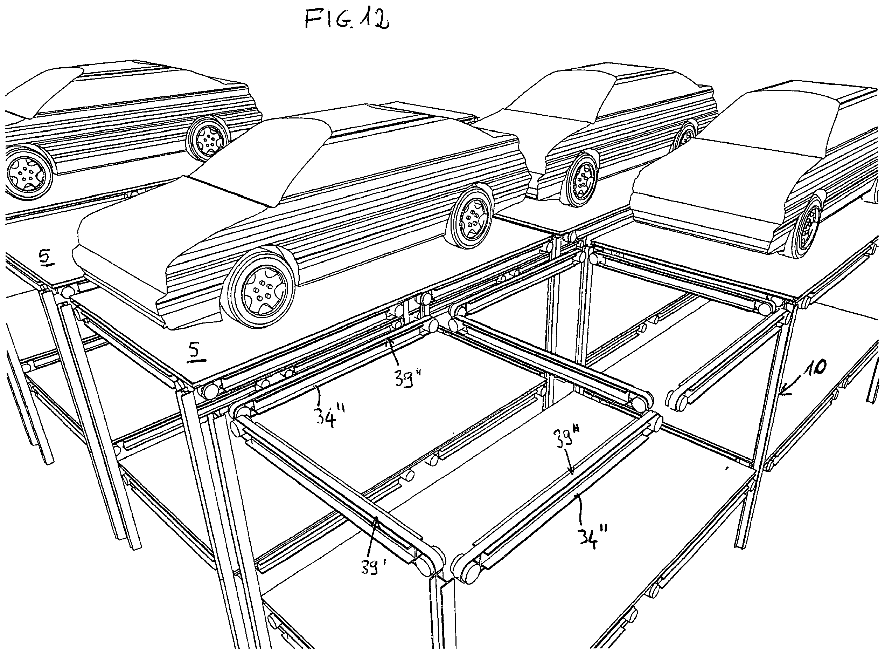

Referring now to Figures 8 and 9 to 12, in which there is illustrated a movable platform 5, it can be noticed that such platform is substantially comprised of a metal planar support plate 20 in the shape of a rectangle or any other suitable shape (see Figure 9), sized to feature such a length and such a width as to be able to support, on the upper planar surface thereof, any kind of motor-vehicle whatsoever (shown in Figure 10 there is a motor-vehicle 21), and having just a limited thickness, wherein such plate is enclosed all along the peripheral edges thereof by a corresponding metal frame 22.

In addition, such movable platform 5 is formed so as to be able to be displaced in any one of longitudinal and transversal directions of each parking tier or floor and, to this purpose, it is provided with either direct or indirect driving means, as described further on, for displacement in such directions; in this connection, it can therefore be oriented in each parking space or bay from one of these longitudinal and transversal directions to the other one through a rotary movement which, as performed in the manner that shall be described in greater detail further on, enables it to be suitably displaced into the desired positions during both the sequence followed to place and arrange each motor-vehicle on the respectively selected parking bay and the sequence of steps followed to remove the same motor-vehicle from its parking bay at the end of the parking time. On the lower surface 23 thereof, each movable platform 5 is provided with a set of separate wheels 24 for it to be able to ride on the floor and/or the carrying structures in which the parking bays are provided.

Each such wheelwork is provided to comprise a metal ball or bearing 25 housed in a corresponding housing (not visible in the drawing) that is in turn contained in a corresponding cylindrically-shaped casing 26, which is removably fitted, e.g. press-fitted, in a related accommodation (not indicated) recessed into the lower or bottom surface 23 of the plate 20, wherein such casing is so sized as to ensure that the ball or wheelwork protrude outwardly to just a slight extent, so as to be able to rest upon and slide on each and any resting surface both vertically and horizontally, and that the terminal region of the same casing is also able to protrude outwardly, again to just a slight extent, and the ball 25 is suitably retained in position, without it being able to come out of or slip off its housing. With such a conformation of the wheels 24, the balls or wheelworks of the same wheels and, as a result, also the movable platform 5 are able to rotate in any direction whatsoever without any need arising for fixed guide rails to be specially provided, as this was the case in the afore-described prior-art solution, where use was made of such rails, actually, for the platform wheels to be able to rest upon and roll along them.

As a result, the elimination of the traditional wheels and the related guide rails enables not only the movable platforms to be conveniently displaced without any hindrance or limitation whatsoever along varying and not in all cases fixed displacement paths, but also the overall height of the same movable platforms to be reduced, which implies that also the height of the parking facilities and buildings in which such movable platforms are displacing can be reduced accordingly.

The wheelworks 24 of the inventive movable platform 5 are preferably provided in the number of four, as located and attached to the plate 20 at the corner regions of the latter; however, they can of course be also provided in a different number and applied on to the plate in positions differing from those shown in drawings by way of illustrative example, without this implying any departure from the scope of the present invention. In this case, essential is the fact that such wheelworks are able to constantly keep the movable platform in a perfect balance, so as to prevent it from tilting or overturning under the weight of a motor-vehicle placed upon it, while of course enabling the movable platform to be at the same time displaced in any desired direction.

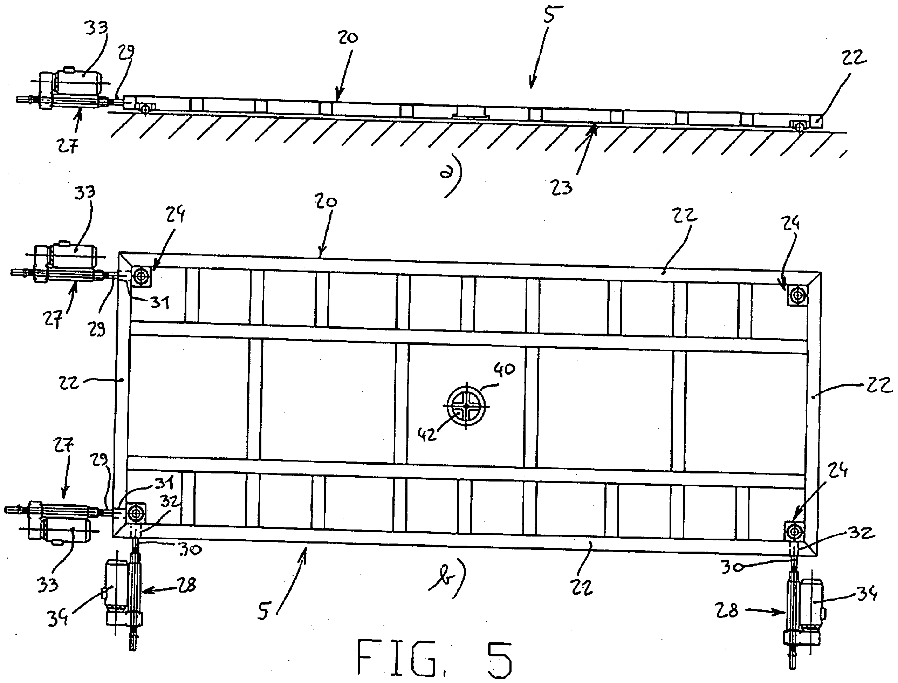

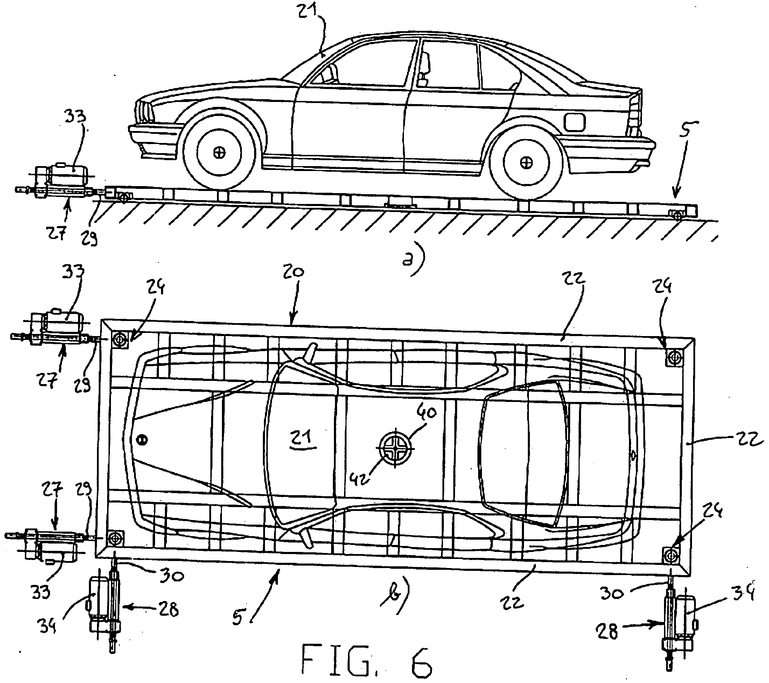

Described there will now be the driving means used to cause the inventive movable platform to be displaced in the various directions. In particular, with reference to Figures 5 and 6 it can be noticed that these illustrate a first kind of such driving means, which are substantially comprised of driving chains or belts mounted on the respective longitudinal edges 27 and transversal edges 28 of the afore-mentioned carrying structures 10 of the parking facilities and driven, i.e. operated by the centralized electronic control unit of the automated parking system. In Figure 5, in particular, there can be noticed two chains or belts 29 mounted around the related pair of longitudinal edges 27 - extending parallel to and spaced from each other - of said carrying structures 10, so as to displace the movable platforms 5 in the longitudinal direction with a reciprocating movement from one of the parking bays to another one, whereas in Figure 6 there can be noticed - further to the above-mentioned two chains or belts 29 - also two further chains or belts 30 that are mounted around the related pair of transversal edges 28 - extending parallel to and spaced from each other - of said carrying structures 10, so as to displace the movable platforms 5 in the transversal direction with a reciprocating movement from one of the parking bays to another one. The chains or belts being described are capable of being slightly raised, with the help of traditional operating or actuating means (not shown), so as to ensure that, during a displacement of the movable platform 5, the latter is able to only come to rest in contact with the chains or belts that actually cause it to displace in the desired direction, and not with the other chains or belts moving in the other directions.

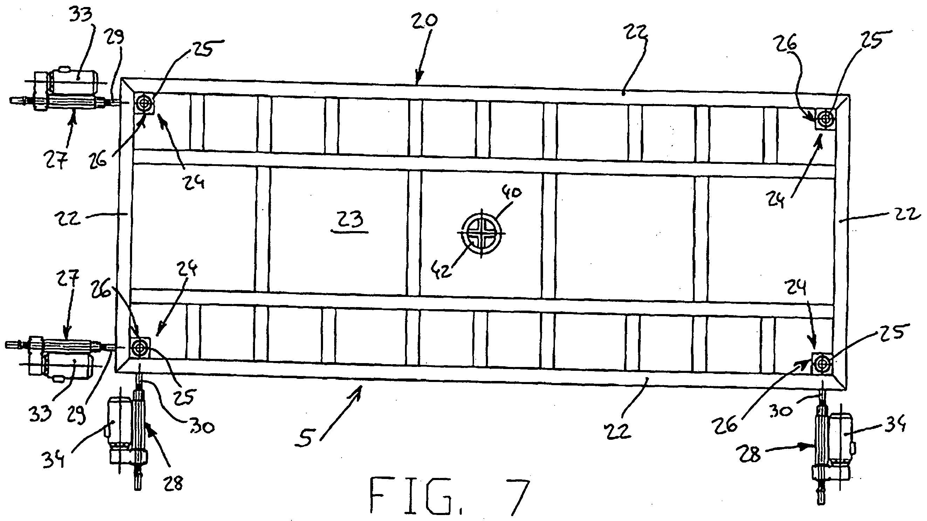

Figures 7 through to 12 can be noticed to illustrate further kinds of driving means for the displacement of the movable platforms 5, such driving means are substantially comprised of a pair of actuators 31, which are provided to the purpose of causing the movable platform 5 to be reprocatingly displaced in a single direction, e.g. in the longitudinal direction, and a pair of further actuators 32, as provided separately and orthogonally spaced from the other actuators mentioned above, which are in turn provided to the purpose of causing the movable platform 5 to be reprocatingly displaced in a single direction running orthogonally to the other one mentioned above, e.g. in the transversal direction.

These actuators 31 and 32 may for instance be formed to include, further to chains or alternate sets of chains driven by gearmotors, as described afore, also elongated recirculating-ball screws (see Figs. 9 to 12) or hydraulic, oleodynamic, pneumatic or similar cylinders (see Figure 7). In the case that they are formed of so-called ball screws, these screws 33 and 34 are provided parallel to and spaced from each other in a mutually aligned arrangement, and are fastened to or embedded with their heads (not visible) into one of the upright walls of each parking facility, or are fastened to the carrying structures of the same parking facility, whereas the respective threaded stem 35 and 36 of the screws of said pairs of screws is adapted to screwed in and unscrewed from a corresponding pair of nut screws 37 and 38 fitted through the respective side edge of the frame 22 of the movable platform 5, all along the extension thereof.

Furthermore, such screws 33 and 34 can be rotatably operated in either one of the rotating directions thereof by corresponding gearmotor actuators 39 and 40 of any kind as generally known as such in the art, which are mounted to cooperate with such screws and are in turn rotatably operated at such time intervals and in such directions of rotation as each time established by the centralized electronic control unit of the automated parking system in accordance with the movements that have to be imparted to the movable platforms for them to be displaced into the desired positions. In this manner, owing to the above-cited screws being fixedly engaged in the related nut screws of the movable platform 5, and in accordance with the direction of rotation of the same screws that enables them to screw into or unscrew from said nut screws, said movable platform can be displaced or not in a reciprocating manner in the respectively required direction up to and from the desired parking place or bay.

In the case of the parking facility shown in Figures 1 and 2, in which there can be noticed that all movable platforms and the motor-vehicles supported by them, along with the central elevator 13, are oriented with their major side in the depth direction of the parking facility, each movable platform with the related motor-vehicle is displaced in a reciprocating manner in the longitudinal direction only, by operating the related screws 33 in either one of the directions of rotation thereof, thus screwing them in or unscrewing them from the corresponding nut screws 37 of each movable platform 5, and the motor-vehicles arranged on the parking bays lying over the parking surface extending at ground level are first placed into the elevator, in the condition in which each screw disengages, i.e. unscrews from the respective nut screw, to be then displaced from such elevator either downwards or upwards, depending on the parking bay in which they have to be parked or from which they have to be withdrawn.

When the elevator carrying a movable platform with the related motor-vehicle moves to any one of the higher parking tiers, i.e. the parking tiers that lie above the tier at ground level, it stops at the level of the desired higher-level parking tier, so that each platform comes to be arranged with its nut screws in a position coinciding with the one of the screws secured at the parking bay; the screws themselves are then rotatably actuated by the related gearmotor actuator, thereby engaging into the corresponding nut screws of the platform and causing the same platform to be displaced onto the selected parking bay and into the final parking position, in which the rotary motion of the screws and the displacement of the movable platform are stopped, while the same screws are kept engaging the corresponding nut screws.

The driving system of the platforms in the alternative embodiment in which they are used to also act as a carrying surface for the afore-described chains, or pairs of chains, operated by gearmotor drives that alternately cause them to slightly raise in view of driving the platforms into displacing in the desired or pre-selected direction, is effective in enabling the vertical dimensions of the entire parking facility to be further reduced, while relieving and lightening the same platforms as a whole owing to said load-carrying surface being distributed in a better, more effective way. The actual choice depends on the nature of the carrying structures used as a support, which in the first case is made of reinforced-concrete pillars, walls and slabs and, in the second case, of steel structures.

Then, for the motor-vehicle to be removed from such parking bay, the above-described sequence of displacements is carried out in the reverse order and, in the case that the motor-vehicle has not to be parked any more, but has on the contrary to be just removed and carried towards to the exit side of the parking facility that is situated at the level of the raised parking tier in which there lies the platform, the latter is in the first place displaced into the elevator, so that the motor-vehicle can in this way be handed over to and picked up by its user, and then the thus cleared platform, i.e. without any motor-vehicle standing on it any longer, is displaced again from the elevator to the parking tier in which it was lying prior to being moved into the elevator, where it is brought back into the initial position by the action of the screw-nut screw and rack assemblies or, in the above-considered case, by the chains or pairs of chains, in a condition in which the elevator is therefore cleared and free to carry out further displacement operations through the same sequences as described above.

When on the contrary the elevator carrying a movable platform with the related motor-vehicle thereupon moves downwards into the lowermost position at ground level, it eventually stops in this position, wherein the platform gets again arranged with its nut screws in a position coinciding with the one of the screws secured in the lower parking bay or place and, in this condition, if the platform has to be displaced onto a lower parking bay, the fixed screws of this parking bay are actuated rotatably and caused to engage the corresponding nut screws of the platform, thereby causing the latter - and the motor-vehicle standing thereupon - to displace into the desired position on this parking bay, in which the rotary motions of the screws and the displacement of the platform are stopped, while the screws keep engaging the corresponding nut screws.

If the motor-vehicle has on the contrary to be withdrawn from the elevator, in the case that the exit of the parking facility lies at the same level, the motor-vehicle is removed from the platform and picked up by its user, and the thus cleared platform, i.e. without the motor-vehicle placed thereupon, is then moved again by the elevator to the parking tier where it was lying previously, and where it is brought back in its original position by the action of the screw-nut screw assembly in the same way as described afore. In the same manner as described above, in the case that the movable platforms have to displace in such carrying structures as the ones shown in Figures 3 and 4, in which all movable platforms, the motor-vehicles carried on the same platforms, and the central elevator are oriented with the major side thereof in the length direction of the building, each movable platform with the related motor-vehicle is displaced in a reciprocating manner in the transversal direction only by the same driving means and through the same sequence of steps as described above, and, in this case, the exit from the parking facility will most obviously be located at ground level in the same parking facility. In the case of a parking building (not shown in the accompanying Figures) with several parking floors or tiers, in which all movable platforms, the motor-vehicles carried on the same platforms, and the central elevator are oriented in each parking tier in the manner shown in Figures 3 and 4, each movable platform - either with or without a related motor-vehicle carried thereupon - is displaced in the same manner as described with reference to such Figures, also in the various parking tiers and into the related parking bays.

Shown in Figure 7 there are the actuators 31 and 32 in the form of cylinders, which are mounted on the metal carrying structures 10 installed in the parking facilities; such actuators comprise cylinders 31 and 32 mounted on the longitudinal edges 27 and transversal edges 28, respectively, of the related carrying structure, i.e. the edges that delimit a parking bay. These cylinders act against the opposite edge of the metal frame 22 of the movable platform 5 displaced into the related parking bay, thereby determining its displacement in the pushing direction. In particular, Figure 7a can be noticed to illustrate a situation in which the cylinders 32 are displaced into the retracted resting position thereof, in which they do not act against the opposite edge of the movable platform 5, which therefore keeps at a standstill, i.e. stationary in this parking position.

Figure 7b can on the contrary be noticed to illustrate a situation in which the cylinders 32 are displaced into the extracted working position thereof, in which they are therefore able to act against the opposite edge of the movable platform 5, thereby causing the latter to be displaced in the same pushing direction towards the adjacent parking bay.

Illustrated in Figure 8 there is now a different embodiment of the driving means used to displace the movable platform 5 in the various directions, wherein such means are again comprised substantially of a pair of rectilinear cylinders 41, which are provided so as to cause said movable platform to be displaced in a reciprocating manner in a single direction, e.g. the longitudinal direction, and a pair of further rectilinear cylinders 42, which are provided separately and orthogonally spaced from the above-cited cylinders so as to be able to cause the movable platform 5 to be displaced in a reciprocating manner in a single direction, e.g. the transversal direction.

The cylinders of each such pair of cylinders 41 and 42 are provided in a mutually aligned arrangement parallel to and spaced from each other, and are attached to or embedded with their head 43 in one of the upright walls of each parking facility, or are secured on to the metal carrying structures 10 of the same parking facilities, whereas the free end of the related rod 44 of each cylinder is capable of fitting into and retracting from a corresponding cavity 45 provided in the related side edge of the frame 22 of the movable platform 5. Furthermore, these cylinders 41 and 42 can be operated by the centralized electronic control system of the automated parking facility, in accordance with the movements that have to be imparted to the movable platforms for the latter to be displaced into the desired positions, from a retracted resting position (not indicated), in which the rods 44 of the cylinders are not fitted into the cavities 45 so that they do not cause the movable platform 5 to displace, to an extracted working position thereof, in which said rods of the cylinders are fitted into said cavities, thereby causing the movable platform 5 to displace in the same direction into the required position, and can furthermore be again operated into the initial retracted resting position thereof, thereby bring in this way the movable platform 5 back into its previous position.

It can be most readily appreciated that, according to the present invention, it is also possible for driving means for said movable platforms 5 to be provided, which may be embodied in a quite different manner with respect to the driving means that have been described above by mere way of illustrative example, without this implying any departure from the scope of the present invention.

Depending on the space that is available to the movable platform 5 to move and displace in the related parking tier, the possibility is also given for such platform to be arranged in variously oriented positions lying orthogonally to each other. This can be done by rotating the same movable platform from one of its positions of orientation to the other one with the aid of appropriate mechanized rotating means that are installed in the contemplated parking positions on each parking floor or tier.

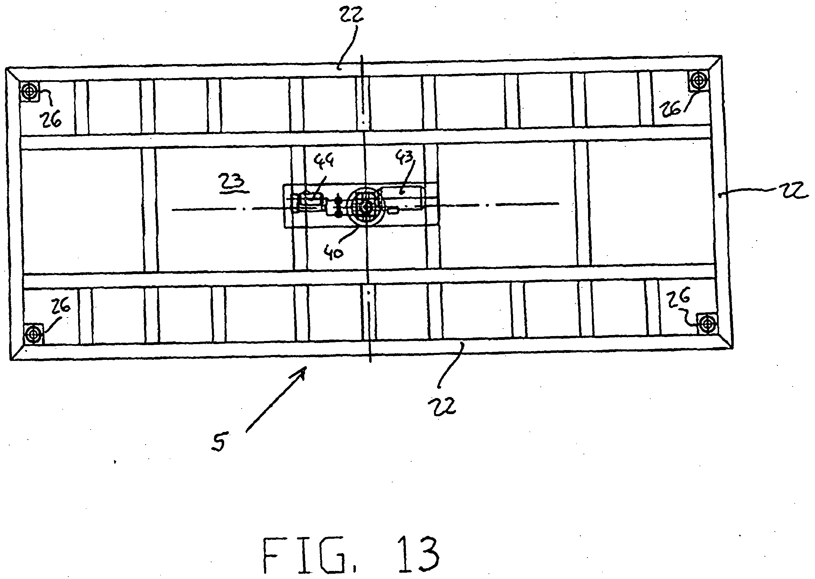

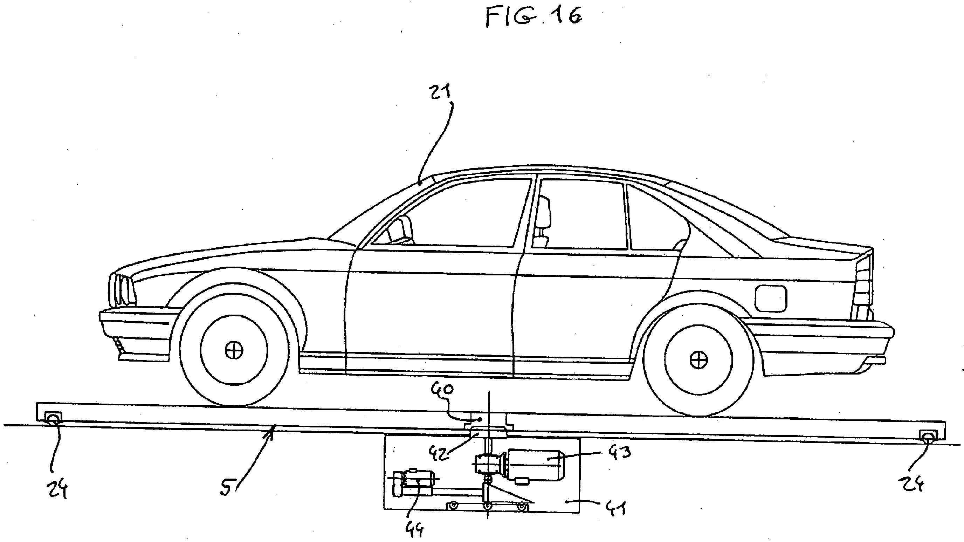

To this purpose, as this can be noticed in the illustrations appearing in Figures 9 to 12 and 13 to 16, each movable platform 5 is so shaped as to feature a central through-aperture 46 with a stepped contour, which is adapted to cooperate with the rotating means so as to bring or not bring the same platform into rotating, as required, from one of the orientation positions thereof to another one. Furthermore, as this can be noticed in the illustrations appearing in Figures 15 and 16, such mechanized rotating means are accommodated within a corresponding recess 47 provided in the floor of each parking bay, and comprise a moving coupling disk 48, which is adapted to fit into the above-cited central through-aperture 46 of the movable platform 5, and is capable of being moved in the vertical direction by a first gearmotor unit 47' from a lowered resting, i.e. non-operative position (see Figure 15), in which said disk 48 is retracted and uncoupled from the through-aperture 46, in a condition in which the movable platform 5 lies still in the initial position thereof and cannot be rotated, to a raised operative position (see Figure 16), in which the disk 48 is fitted into and coupled with the through-aperture 46, in a condition in which the movable platform 5 can be displaced and rotated into the other one of its positions of orientation.

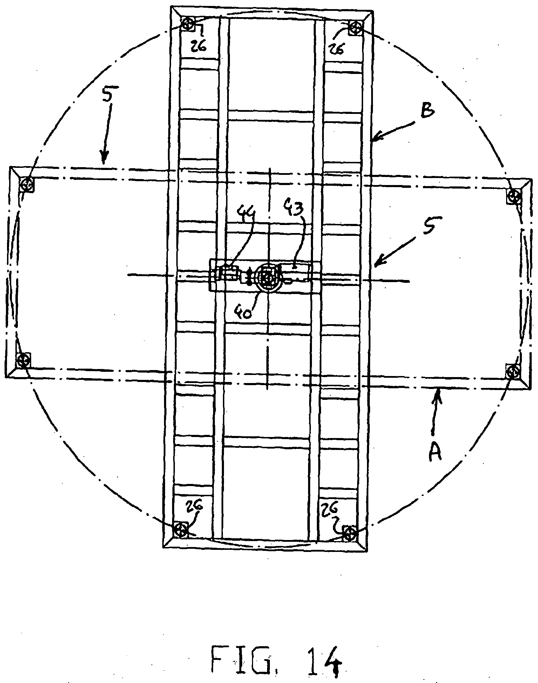

In Figure 14 there can be noticed the two positions lying orthogonally to each other, into which the movable platform 5 can be rotated, wherein such positions can be noticed to be constituted respectively by a longitudinal position A, in which the platform is oriented with the major length thereof in the longitudinal direction of the parking tier and with the shorter length thereof in the transversal direction of the parking tier, and a transversal position B, in which the platform is oriented with the shorter length thereof in the longitudinal direction of the parking tier and with the major length thereof in the transversal direction of the parking tier. The rotation of the movable platform 5 from one of such positions of orientation thereof to the other one is brought about by a second gearmotor unit 49 rotatably driving the coupling disk 48.

## Claims

1. Automated parking system, having one or more overlapped floors (6), and comprising a movable platform (5) for transporting motor-vehicles (8) towards and from parking positions selected in advance, such system including a modular constructive structure (10) made with materials for building constructions or with a plurality of metallic section bars adequately shaped and joined to each other, delimiting one or more horizontal floors (14) for parking the motor-vehicles (8) arranged onto said such movable platform (5), the system including also centralized electronic control means adapted to control said movable platform (5) and elevator means (13) for transporting said movable platform (5) to the different parking floors (14), said movable platform (5) comprising a differently shaped flat plate (20), provided on its lower surface (23) with a set of separate wheels (24) for sliding alternately into the floor of each parking floor (14) and on to the load bearing structures where the parking places are realized, and wherein said movable platform (5) is driven respectively in the longitudinal or transversal directions thereof by first and second driving means (29, 33, 31 ; 30, 34, 32), and from the one to the other one of the longitudinal or transversal directions by rotation means (47', 48, 49), said first and second driving means (29, 33, 31 ; 30, 34, 32) and said rotation means (47', 48, 49) being controlled by said centralized electronic control means, and said first and second driving means (29, 33, 31 ; 30, 34, 32) are provided into each parking floor,
**characterized in that** said rotation means (47', 48, 49) are provided into each parking floor, said rotation means (47', 48, 49) comprise a movable coupling disc (48), and first and second powered means (47', 49), housed into a corresponding cavity (47) provided in the floor on each parking place, said coupling disc (48) being able to be coupled and uncoupled with respect to a corresponding central through opening (46) shaped with steps and provided into each movable plate (5), by means of an alternate vertical displacement of said disc (48) by said first powered means (47'), from a lowered rest position in which said disc (48) is disconnected and uncoupled with respect to said through opening (46), under the condition in which said movable platform (5) remains stationary in the starting position thereof and cannot be rotated, to a raised working position in which said disc (48) is inserted and coupled with respect to said through opening (46), under the condition in which said movable platform (5) may be displaced and rotated into its other orientation position, and said second powered means (49) are adapted to drive in rotation said disc (48), to determine the rotation of said movable platform (5) from the one to the other one of its longitudinal and transversal orientation positions.

2. Movable platform according to claim **1, characterized in that** said first and second driving means include chains or belts (29) mounted on to said parking constructive structure (10) and provided for determining the alternate displacement of said movable platform (5) in a single direction, and of additional chains or belts (30), separate and moved away in the orthogonal direction with respect to the previous chains or belts, and provided for determining the alternate displacement of said movable platform (5) in a single direction, orthogonal to the preceding one, said chains or belts (29, 30) being able to be slightly lifted by per se known transmission means, to allow that during the movement said movable platform (5) be arranged into contact with the sole chains or belts causing the advancing in the desired direction.

## Patentansprüche

1. Automatisches Parksystem, das eine oder mehrere überlappte Etagen (6) hat und eine verfahrbare Plattform (5) zum Transportieren von Kraftfahrzeugen (8) zu und aus Parkpositionen aufweist, die im voraus ausgewählt sind, wobei das System eine modular aufbauende Struktur (10) hat, die aus Materialien für Bauwerkkonstruktionen oder aus einer Vielzahl von metallischen Profilstangen gebildet ist, die adäquat geformt und miteinander verbunden sind und eine oder mehrere horizontale Decks (14) zum Parken der Kraftfahrzeuge (8) begrenzen, die auf der verfahrbaren Plattform (5) angeordnet sind, wobei das System ferner zentrale elektronische Steuermittel enthält, die geeignet sind, die verfahrbare Plattform (5) zu steuern und Aufzugmittel (13) zum Transportieren der verfahrbaren Plattform (5) zu den verschiedenen Parkdecks (14), wobei die verfahrbare Plattform (5) eine verschieden geformte flache Platte (20) enthält, die an ihrer Unterseite (23) mit einem Satz getrennter Räder (24) versehen ist, um wechselnd in den Boden jedes Parkdecks (14) und auf die Lasttragenden Strukturen zu gleiten, wo die Parkplätze realisiert sind, und wobei die verfahrbare Plattform (5) in ihrer Längsrichtung oder Querrichtung durch erste und zweite Antriebsmittel (29, 33, 31; 30, 34, 32) und aus der einen zu der anderen Längsrichtung oder Querrichtung durch Rotationsmittel (47', 48, 49) bewegt wird, wobei die ersten und die zweiten Antriebsmittel (29, 33, 31; 30, 34, 32) und die Rotationsmittel (47', 48, 49) durch die zentralen elektronischen Steuermittel gesteuert werden, und wobei die ersten und die zweiten Antriebsmittel (29, 33, 31; 30, 34, 32) in jedem Parkdeck vorgesehen sind;
**dadurch gekennzeichnet,**
**dass** die Rotationsmittel (47', 48, 49) in jedem Parkdeck vorgesehen sind, dass die Rotationsmittel (47', 48, 49) eine bewegbare Kupplungsscheibe (48) und erste und zweite Kraft-betätigte Mittel (47', 49) enthalten, die in einemzugehörigen Hohlraum (47) in dem Boden jedes Parkplatzes untergebracht sind, wobei die Kupplungsscheibe (48) in der Lage ist, mit einer zugehörigen zentralen Durchgangsöffnung (46) gekoppelt und entkoppelt zu werden, die mit Stufen versehen ist und in jeder verfahrbaren Platte (5) vorgesehen ist, mittels einer wechselnden vertikalen Verlagerung der Scheibe (48) durch die ersten Kraft-betätigten Mittel (47') aus einer unteren Ruheposition, in der die Scheibe (48) von der Durchgangsöffnung (46) getrennt und entkoppelt ist, in einem Zustand, in dem die verfahrbare Plattform (5) stationär in ihrer Startposition verbleibt und nicht gedreht werden kann, in eine angehobene Arbeitsposition, in der die Scheibe (48) in die Durchgangsöffnung (46) eingesetzt und mit dieser gekoppelt ist, in dem Zustand, in dem die verfahrbare Plattform (5) verlagert und in eine andere Ausrichtungsposition gedreht werden kann, wobei die zweiten Kraft-betätigten Mittel (49) in der Lage sind, die Scheibe (48) in Drehung zu versetzen, um die Drehung der verfahrbaren Plattform (5) von der einen in die andere ihrer longitudinalen und transversalen Ausrichtungsposition zu bestimmen.

2. Verfahrbare Plattform nach Anspruch 1,
**dadurch gekennzeichnet,**
**dass** die ersten und zweiten Antriebsmittel Ketten oder Riemen (29) enthalten, die an der Parkbaustruktur (10) befestigt sind und vorgesehen sind, die wechselnde Verlagerung der verfahrbaren Plattform (5) in einer einzigen Richtung zu bestimmen, und zusätzliche Ketten oder Riemen (30), die getrennt und in orthogonaler Richtung zu den vorhergehenden Ketten oder Riemen weg bewegt sind, um die wechselnde Verlagerung der verfahrbaren Plattform (5) in einer einzigen Richtung orthogonal zu der vorhergehenden zu bestimmen, wobei die Ketten oder Riemen (29, 30) in der Lage sind, durch an sich bekannte Übertragungsmittel etwas angehoben zu werden, um es zu ermöglichen, dass während der Bewegung der verfahrbaren Plattform (5) diese in Kontakt nur mit den Ketten oder Riemen angeordnet ist, die die Bewegung in der gewünschten Richtung hervorrufen.

## Revendications

1. Système de stationnement automatisé, qui présente un ou plusieurs niveaux superposés (6), et qui comprend une plate-forme mobile (5) destinée à transporter des véhicules automobiles (8) vers, et à partir, d'une position de stationnement sélectionnées à l'avance, un tel système comprenant une structure de construction modulaire (10) réalisée avec des matériaux destinés à des constructions de bâtiments, ou avec une pluralité de barres métalliques d'ancrage qui présentent une forme appropriée et qui sont reliées les unes aux autres, en délimitant un ou plusieurs niveaux horizontaux (14) destinés à garer les véhicules automobiles (8) disposés sur une telle dite plate-forme mobile (5), le système comprenant également des moyens de commande électroniques centralisés adaptés à la commande de ladite plate-forme mobile (5), et des moyens élévateurs (13) destinés à transporter ladite plate-forme mobile (5) vers les différents niveaux de stationnement (14), ladite plate-forme mobile (5) comprenant une plaque plate de forme différente (20), disposée sur sa surface inférieure (23) avec un ensemble de roues distinctes (24) destinées à glisser de manière alternée dans le plancher de chaque niveau de stationnement (14) et sur les structures porteuses où sont réalisées les places de stationnement, et dans lequel ladite plate-forme mobile (5) est entraînée respectivement dans les directions longitudinale ou transversale de celle-ci par des premiers et seconds moyens d'entraînement (29, 33, 31 ; 30, 34, 32), et à partir de l'une vers l'autre des directions longitudinale ou transversale, par des moyens de rotation (47', 48, 49), lesdits premiers et seconds moyens d'entraînement (29, 33, 31 ; 30, 34, 32) et lesdits moyens de rotation (47', 48, 49) étant commandés par lesdits moyens de commande électroniques centralisés, et lesdits premiers et seconds moyens d'entraînement (29, 33, 31 ; 30, 34, 32) étant prévus dans chaque plancher de stationnement ;
**caractérisé en ce que** lesdits moyens de rotation (47', 48, 49) sont disposés dans chaque plancher de stationnement, lesdits moyens de rotation (47', 48, 49) comprennent un disque d'accouplement mobile (48), et des premiers et seconds moyens actionnés (47', 49), logés dans une cavité correspondante (47) disposée dans le plancher de chaque place de stationnement, ledit disque d'accouplement (48) pouvant être accouplé et désaccouplé d'une ouverture traversante centrale correspondante (46) qui présente une forme étagée et qui se situe dans chaque plaque mobile (5), au moyen d'un déplacement vertical alterné dudit disque (48) par lesdits premiers moyens actionnés (47'), à partir d'une position de repos abaissée dans laquelle ledit disque (48) est déconnecté et désaccouplé de ladite ouverture traversante (46), dans l'état où ladite plate-forme mobile (5) demeure stationnaire dans sa position de départ, et ne peut pas être tournée, vers une position de travail redressée dans laquelle ledit disque (48) est inséré et accouplé dans ladite ouverture traversante (46), dans l'état où ladite plate-forme mobile (5) peut être déplacée et tournée dans son autre position d'orientation, et lesdits seconds moyens actionnés (49) sont adaptés de façon à entraîner en rotation ledit disque (48), de façon à déterminer la rotation de ladite plate-forme mobile (5) à partir de l'une vers l'autre de ses positions d'orientation longitudinale et transversale.

2. Plate-forme mobile selon la revendication 1, **caractérisée en ce que** lesdits premiers et seconds moyens d'entraînement comprennent des chaînes ou des courroies (29) montées sur ladite structure de construction de stationnement (10), et prévues de façon à déterminer le déplacement alterné de ladite plate-forme mobile (5) dans une seule direction, et des chaînes ou des courroies supplémentaires (30), séparées et déplacées en s'éloignant dans la direction orthogonale par rapport aux chaînes ou aux courroies précédentes, et prévues de façon à déterminer le déplacement alterné de ladite plate-forme mobile (5) dans une seule direction, orthogonale à la précédente, lesdites chaînes ou courroies (29, 30) pouvant être légèrement relevées par des moyens de transmission connus en tant que tels, de façon à permettre à ladite plate-forme mobile (5) d'entrer en contact, au cours du déplacement, avec les seules chaînes ou courroies, ce qui provoque la progression dans la direction souhaitée.
